Europäisches Patentamt

(19) **European Patent Office**

Office européen des brevets

(11) Numéro de publication: **0 057 634 B1**

(12) FASCICULE DE BREVET EUROPEEN

(45) Date de publication du fascicule du brevet:
02.05.85

(51) Int. Cl.⁴: **G 21 C 19/34, B 23 K 26/02**

(21) Numéro de dépôt: **82400134.1**

(22) Date de dépôt: **25.01.82**

(54) Traversée étanche de la paroi d'une cellule chaude par un faisceau laser et son procédé d'utilisation.

(30) Priorité: **30.01.81 FR 8101810**

(43) Date de publication de la demande:
**11.08.82 Bulletin 82/32**

(45) Mention de la délivrance du brevet:
**02.05.85 Bulletin 85/18**

(84) Etats contractants désignés:
**BE DE FR GB**

(56) Documents cités:
**FR - A - 1 219 406
FR - A - 1 328 141
FR - A - 2 040 616
FR - A - 2 237 280
GB - A - 1 009 000
GB - A - 1 215 714
US - A - 2 874 107
US - A - 3 569 993**

**Article de P.R. HIGGINSON et al. "Laser cutting equipment for dismantling irradiated P.F.R. fuel sub-assemblies" présenté au cours de la Conférence internationale, EXAMEN après irradiation, tenue à Grange-over-Sands, Lake District du 13-16 mai 1980, Grande Bretagne et publié par le Dounreay Nuclear Power Development establishment UKAEA**

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Geffroy, Jean, 11 Bis, rue des Moines, F-78000 Versailles (FR)**
Inventeur: **Glachet, Charles, 42, Rue Rochambeau, F-41100 Vendome (FR)**
Inventeur: **Moulin, Maurice, 9, Rue Théodore de Banville, F-91120 Palaiseau (FR)**
Inventeur: **Noel, Jean Paul, 22 Bis, Rue des Grillons, F-92290 Chatenay Malabry (FR)**

(74) Mandataire: **Mongrédien, André et al, c/o BREVATOME 25, rue de Ponthieu, F-75008 Paris (FR)**

# Description

La présente invention a pour objet une traversée étanche de la paroi d'une cellule chaude par un faisceau laser. Elle a également pour objet un procédé d'utilisation de cette traversée.

Une installation d'usinage par faisceau laser se compose d'un laser, et d'une tête d'usinage, située à proximité de la pièce à usiner, qui focalise le faisceau laser.

Comme on le sait, les densités de puissance délivrée par les lasers continus à $CO_2$ permettent d'obtenir la température de fusion ou de volatilisation de n'importe quel matériau par simple focalisation du faisceau laser. Les faisceaux laser permettent donc, entre autres applications, des procédés d'usinage n'introduisant pas d'impuretés dans le matériau à usiner ou à souder. Les procédés de découpage par faisceau laser sont également particulièrement bien adaptés aux problèmes de découpe et de réduction de volume dans une cellule chaude de parties métalliques telles que des structures d'assemblages d'éléments combustibles nucléaires.

Dans les installations de découpage ou de soudage actuellement connues, telles que par exemple celle qui est décrite dans l'article de P.R. HIGGINSON et D.A. CAMPBELL: «Laser Cutting Equipment for Dismantling Irradiated PFR Fuel Sub-Assemblies», émanant du Dounreay Nuclear Power Development Establishment, UKAEA, présenté au cours de la Conférence Internationale d'Examen après Irradiation tenue 1 Grange-over-Sands dans le Lake-District, Grande-Bretagne, du 13 au 16 mai 1980, le laser proprement dit est situé à l'extérieur de l'enceinte chaude et la tête d'usinage située à l'intérieur de la cellule focalise le faisceau du laser sur la pièce à découper. La tête d'usinage reste à l'intérieur de la cellule. De plus, le document ne décrit aucune étanchéité assurant le confinement de l'enceinte et aucun moyen n'est non plus défini pour le refroidissement des fenêtres ou lentilles placées sur le trajet du faisceau laser.

La tenue de la lentille de focalisation de la tête d'usinage est l'un des problèmes essentiels qui se posent dans une installation de ce genre. En effet, cette tête d'usinage, située à l'intérieur de la cellule chaude, est exposée en permanence au rayonnement de la cellule. Elle devient donc progressivement opaque sous l'effet de ce rayonnement. Par suite, lorsqu'elle est traversée par le faisceau laser, elle absorbe une quantité de chaleur qui va en augmentant au fur et à mesure que la lentille de focalisation devient plus opaque. Les moyens de refroidissement de la lentille, qui sont prévus selon la puissance du faisceau laser, deviennent insuffisants pour refroidir la lentille. Elle s'échauffe, et cet échauffement peut conduire à sa rupture.

Dans les installations de découpage connues, on résolvait jusqu'à présent ce problème en remplaçant la tête d'usinage au bout d'une durée de fonctionnement relativement courte.

La présente invention apporte une solution à ce problème et allonge de façon considérable la durée de vie de la tête d'usinage et en particulier de la lentille de focalisation, en la soustrayant au rayonnement de la cellule chaude lorsqu'elle n'est pas en fonctionnement. La tête d'usinage est en effet reculée derrière une protection qui la protège de ce rayonnement. Ainsi la tête est soumise au rayonnement seulement lorsqu'elle est en position de travail, et sa durée de vie est accrue de façon importante.

D'autre part, le conteneur constitue un ensemble étanche qui peut être retiré et remplacé facilement. En effet, il est exempt de contamination sur toute sa surface extérieure. La paroi extérieure du conteneur est protégée de la contamination par le soufflet qui le raccorde à la bride de conteneur. D'autre part, pendant que la tête d'usinage est en position de travail, les deux portes, à savoir la porte de cellule et la porte de conteneur, restent acolées l'une contre l'autre. Elles ne sont séparées qu'après le verrouillage de la porte de cellule sur la paroi de la cellule chaude. A partir de ce moment là, les faces en regard sont protégées contre la contamination. Ainsi ces faces restent en permanence exemptes de contamination.

Il est vrai que l'atmosphère contaminée de la cellule pénètre, pendant l'opération d'usinage, dans l'espace délimité par l'intérieur de l'extrémité du conteneur et l'extérieur du tube de la ligne d'usinage. Cependant, cette contamination est confinée dans le conteneur et elle ne peut contaminer les parois extérieures. Ces parois externes restent donc totalement exemptes de contamination. Le conteneur peut ainsi être retiré et remplacé facilement, en utilisant toutefois des moyens de protection adéquats contre le rayonnement.

La présente invention a pour objet une traversée étanche de la paroi de l'enceinte d'une cellule chaude par un faisceau laser au moyen de laquelle la tête d'usinage peut être entièrement rétractée derrière une paroi de protection en dehors des périodes d'utilisation.

Selon l'invention, la tête d'usinage est montée à l'extrémité d'un tube susceptible de coulisser à l'intérieur d'un conteneur de protection luimême capable de se déplacer en translation et en rotation, à l'intérieur d'un fourreau et qui peut être accosté de façon étanche sur une bride solidaire de la paroi de confinement de la cellule chaude. Lorsque la tête d'usinage est rétractée à l'intérieur du conteneur, ce dernier peut, après déverrouillage, reculer dans le fourreau, ce qui permet d'interposer un barillet de protection contre le rayonnement entre la cellule et la ligne d'usinage.

L'étanchéité vis-à-vis de l'atmosphère de la cellule est assurée par un soufflet disposé entre le tube et le conteneur, ainsi que par un élément de focalisation fixé de manière étanche à l'intérieur de la tête d'usinage.

Plus précisément, cette traversée étanche comprend:

— un fourreau raccordé à la paroi épaisse de protection biologique de la cellule,

— une bride et une porte étanche, dite porte de cellule, ménagée dans la paroi de la cellule en regard de fourreau,

– un conteneur étanche, de forme générale allongée, situé à l'intérieur du fourreau, le conteneur étant muni à son extrémité dirigée vers la paroi de la cellule d'une bride, dite bride de conteneur, raccordée par un soufflet d'étanchéité, une porte étanche dite porte de conteneur, s'adaptant sur la bride du conteneur,

– des moyens pour déplacer le conteneur en translation et en rotation dans le fourreau,

– des moyens pour verrouiller de manière étanche la porte de conteneur sur la bride de celui-ci,

– des moyens pour verrouiller la porte de la cellule sur la bride de celle-ci,

– des moyens permettant la combinaison des deux mouvements de verrouillage de telle sorte que les portes étant verrouillées le conteneur puisse être reculé,

– des moyens permettant la combinaison des deux mouvements de déverrouillage de telle sorte que les portes du conteneur et de cellule soient solidarisées entre elles, la porte de la cellule et la porte du conteneur pouvant alors être déposés ensemble à l'intérieur de la cellule,

– une ligne d'usinage située à l'intérieur du conteneur,

– des moyens pour déplacer en translation la ligne d'usinage à l'intérieur du conteneur,

– des moyens de protection biologique pouvant être interposés entre la cellule et le conteneur lorsqu'il est en position rétractée.

L'invention a également pour objet un procédé d'utilisation de cette traversée étanche.

Ce procédé se caractérise en ce que:

– on efface les moyens de protection biologique interposés entre la cellule et le conteneur,

– on effectue une translation du conteneur jusqu'à engager la bride de la porte de conteneur dans la bride de cellule comportant la porte de cellule,

– on effectue une rotation du conteneur pour effectuer simultanément les verrouillages:

– bride de conteneur sur la bride de cellule,

– la porte de conteneur sur la porte de la bride de cellule,

– en même temps: la porte de conteneur se déverrouille de la bride de conteneur,

– on dépose, de l'intérieur de la cellule, l'ensemble constitué par la porte de cellule et la porte de conteneur,

– on réalise une translation du tube par rapport au fourreau, ce qui fait pénétrer la buse d'usinage à l'intérieur de la cellule.

D'autres caractéristiques et avantages de l'invention ressortiront de la description qui va suivre, donnée à titre d'exemple purement illustratif et nullement limitatif en référence aux dessins annexés, sur lesquels:

– la figure 1 représente une vue d'ensemble de la traversée d'une paroi étanche conforme à l'invention,

– la figure 2 représente une vue de détail de l'élément modulaire de la fenêtre d'étanchéité,

– les figures 3 et 4 illustrent le fonctionnement de la traversée de paroi représentée sur les figures 1 et 2.

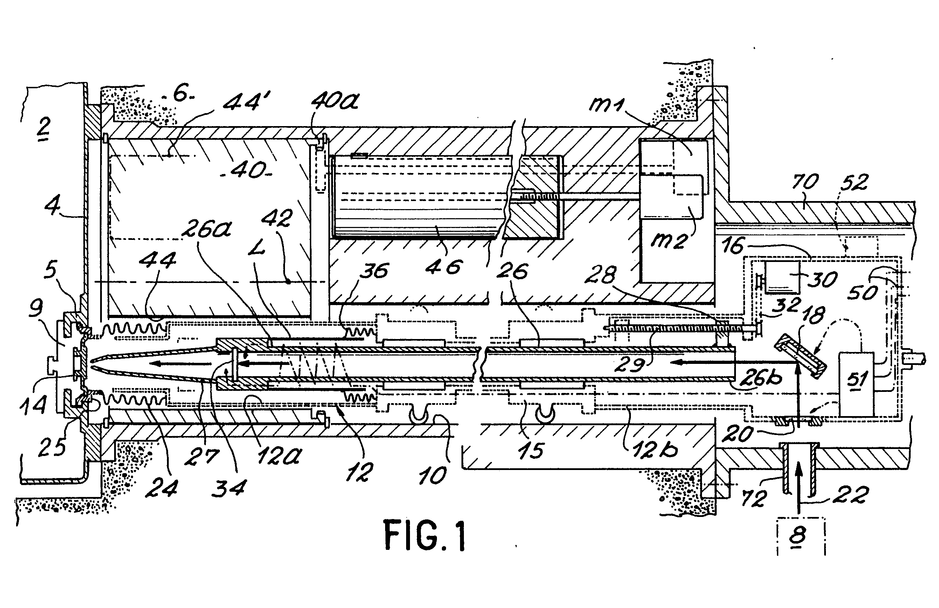

Sur la figure 1, la référence 2 désigne l'intérieur d'une cellule dans laquelle on peut traiter des produits radioactifs. La cellule 2 est délimitée par une paroi de confinement 4. Une paroi épaisse de béton 6 assure une protection contre le rayonnement du milieu radioactif contenu dans la cellule 2.

Comme on l'a rappelé précédemment, les procédés de découpage pour faisceaux laser sont bien adaptés aux problèmes de découpe et de réduction de volume de matériaux tels que des structures d'assemblage d'éléments combustibles de réacteur nucléaire contenu dans une enceinte telle que la cellule 2.

La présente invention a pour objet une traversée étanche des parois 4 et 6 par un faisceau laser, de manière à permettre l'usinage des matériaux contenus à l'intérieur de la cellule chaude 2 au moyen d'un laser d'usinage 8 se trouvant à l'extérieur de la cellule 2, la tête d'usinage étant rétractable derrière un barillet de protection 40 contre le rayonnement en dehors des périodes d'utilisation.

Un fourreau métallique cylindrique 10, raccordé de manière étanche à la paroi de confinement 4 traverse la paroi de béton 6. Une porte étanche 9 s'adapte sur une bride 5 dite bride de cellule solidaire de la paroi de confinement 4 et permet l'isolement ou la communication avec l'intérieur de l'enceinte 2. A l'intérieur du fourreau 10 se trouve un conteneur 12. Ce conteneur peut effectuer des mouvements de translation et de rotation par rapport au fourreau 10 au moyen de paliers à roulement 15. Des paliers de ce type sont connus. En conséquence, ils ne seront pas décrits en détail.

A son extrémité 12a dirigée vers l'intérieur de la cellule chaude 2, extrémité que l'on appellera dans la suite du texte «extrémité interne du conteneur», le conteneur comporte un soufflet d'étanchéité 24 relié de manière étanche à une bride 25. Une porte étanche 14, dite porte de conteneur est montée sur la bride 25 du conteneur. La bride 25 peut s'adapter de manière étanche à la paroi 4 de la cellule chaude par verrouillage par rotation de la bride 25. Ce verrouillage étant réalisé, la porte de cellule 9 et la porte de conteneur 14 sont solidarisées de telle sorte qu'on peut les ôter ensemble de l'intérieur de la cellule, par exemple au moyen d'un télémanipulateur.

Des dispositifs permettant de verrouiller l'une sur l'autre deux enceintes étanches, telles que la cellule 2 et le conteneur 12, font partie de l'art antérieur. Ces dispositifs de transfert étanche à double porte peuvent être utilisés pour connecter un conteneur sur une enceinte sans contamination des faces en regard des portes ni mise en contact de l'atmosphère intérieure de la cellule avec l'extérieur.

Le transfert étanche entre la cellule et le conteneur s'effectue en verrouillant dans un premier temps le conteneur sur la cellule, et dans un deuxième temps, les deux portes entre elles. L'ouverture de la double porte peut alors être faite au gant ou au télémanipulateur permettant d'effectuer le transfert sans rupture d'étanchéité.

Le fonctionnement d'un dispositif de transfert étanche à double porte est le suivant.

Le conteneur et l'enceinte étant fermés, on approche le conteneur, on le tourne de 60° dans le sens des aiguilles d'une montre. On sent un premier point dur lorsque la porte du conteneur vient en butée, puis un deuxième lorsque les deux portes se déverrouillent. On ote alors l'ensemble des deux portes au gant ou à l'aide d'un télémanipulateur. On effectue le transfert et on replace la double porte. On effectue une rotation en deux temps qui déconnecte les deux portes, verrouille la porte de conteneur et déverrouille le conteneur de la bride de cellule. Ainsi, le conteneur et l'enceinte sont à nouveau fermés.

A son autre extrémité 12b, le conteneur 12 comporte un boîtier 16 fixé de manière étanche. Le boîtier 16 contient un miroir plan de renvoi 18. Il possède une fenêtre de confinement 20 par laquelle le faisceau 22 du laser 8 pénètre à l'intérieur du boîtier 16 pour être réfléchi par le miroir plan 18. On remarque que lorsque la porte de confinement 14 est fermée, le conteneur 12 délimite un espace totalement étanche à l'intérieur duquel on peut confiner la contamination.

A l'intérieur du conteneur 12 se trouve un tube 26 qui peut se déplacer en translation par rapport à ce dernier. Cette translation est réalisée par exemple au moyen d'un système vis-écrou 28, 29. La vis 29 est entraînée en rotation par le moteur 30 au moyen d'une courroie 32. On réalise ainsi une translation longitudinale du tube 26 par rapport au conteneur 12.

A son extrémité 26a dirigée vers l'intérieur de la cellule, le tube 26 comporte une lentille 34. Cette lentille joue les rôles d'éléments de confinement des enceintes et de focalisation du faisceau laser. La lentille est en séléniure de zinc de focale adaptée au travail à effectuer. Une buse d'usinage 27 dont la longueur est fonction de la focale de la lentille est fixée par des vis à l'extrémité 26a du tube 26. L'autre extrémité 26b du tube 26 est ouverte. La buse d'usinage 27 est également fixée à l'extrémité 26a du tube 26. Le tube 26 et la tête 27 constituent la ligne d'usinage L. La lentille 34 et la buse d'usinage 27 peuvent être entretenues hors de la cellule active en boîte à gants.

Un barillet 40, tournant autour de son axe 42, assure une protection contre le rayonnement γ lorsque la ligne d'usinage est en position rentrée. Ce barillet comporte une ouverture cylindrique 44 suffisante pour permettre en position ouverte comme représenté sur la figure 1, le passage du conteneur 12. Lorsque la ligne d'usinage est rentrée, un moteur m₁ fait pivoter le barillet 40 de 180° autour de l'axe 42 par l'intermédiaire d'une couronne dentée 40a. Le cylindre 46 pénètre alors dans l'ouverture 44 qui se trouve alors dans la position 44' indiquée en trait mixte sur la figure 1.

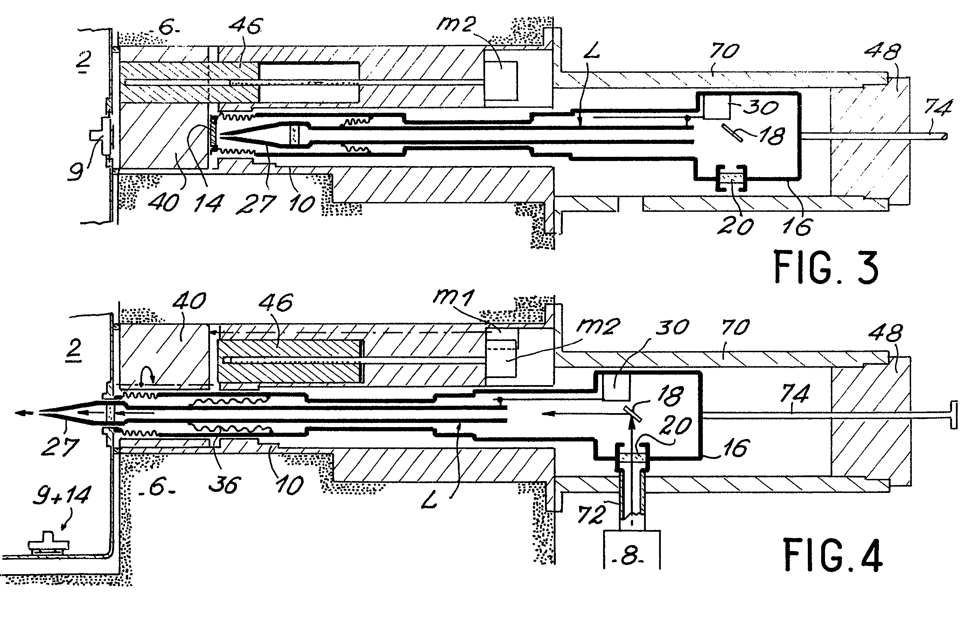

Lorsque le barillet 40 est en position ouverte, un bouchon extérieur 48 (visible sur les figures 3 et 4) assure une protection complémentaire contre le rayonnement γ.

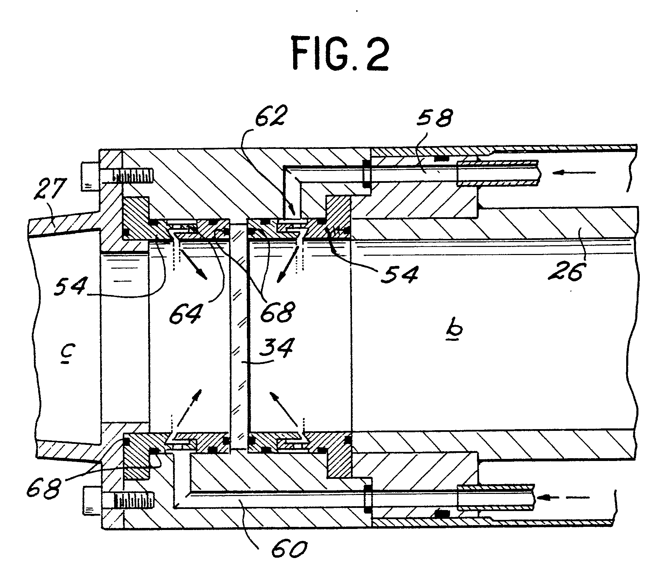

La puissance transmise par le faisceau laser est telle qu'un refroidissement de la fenêtre 20, du système de focalisation 34 ainsi que du miroir plan 18 est nécessaire. Le dispositif de l'invention comporte donc des canalisations 50 d'amenée de gaz de refroidissement raccordées au boîtier de distribution 51. En outre, un filtre 52 est prévu sur le boîtier pour la sortie des gaz de refroidissement. On réalise un écoulement de gaz de refroidissement le long des faces de la fenêtre 20, du dispositif de focalisation 34, et du miroir plan 18. Le dispositif de refroidissement des composantes optiques est représenté à une échelle agrandie sur la figure 2.

On a représenté sur la figure 2 une vue de détail de l'élément modulaire comportant une lentille 34. Cet élément modulaire assure la séparation des zones de confinement froide b et chade c. En remplacement de la lentille 34 l'élément modulaire peut être équipé de matériaux tels que ZnSe-As Ga-Nacl transmettant l'infra-rouge avec une faible absorption d'énergie. Les faces de la pièce 34 étant à faces parallèles, nous l'avons nommée fenêtre.

Comme on l'a déjà précisé, l'importance des puissances transmises nécessitent le refroidissement des éléments 20 et 34 traversés par le faisceau laser. Ceci est réalisé au moyen de courants gazeux qui circulent le long de ses faces. Le gaz utilisé est en général identique à celui de la cellule et est de l'azote sec filtré. Le gaz de refroidissement assure en outre un rôle de confinement dynamique de la contamination: la pression est supérieure dans la zone froide f à celle qui règne dans la zone c. Ainsi, en cas de fuite, l'écoulement du gaz se produit de la zone froide vers la zone chaude, sans contamination de l'intérieur du tube 26.

Le gaz de refroidissement peut jouer en outre un rôle complémentaire.

Dans le cas où le faisceau laser est utilisé pour le découpage, on peut utiliser de l'oxygène comme gaz de refroidissement, de la face de la lentille 34 située du côté de la buse 27. Cet oxygène apporte une puissance complémentaire à celle du faisceau laser par réaction exothermique avec les matériaux à découper. Les quantités de gaz nécessaires sont faibles comparativement au volume de la cellule et sont sans incidence sur l'atmosphère de celle-ci.

Dans le cas d'une opération de soudage, le gaz de refroidissement peut être de l'hélium ou un gaz neutre. Les gaz de refroidissement sont amenés par des canalisations 58 et 60 débouchant dans des chambres annulaires 62 et 64 pratiquées dans les bagues 54. Des fentes annulaires débouchent à proximité de l'élément de focalisation 34 et dirigées vers celui-ci répartissent le gaz de refroidissement dur l'ensemble de la surface de ce dernier.

Un ensemble de joints 68 assure les différentes étanchéités nécessaires, que ce soit entre la buse d'usinage 27 et la bague 54 entre la deuxième bague 54 et le tube 26, ou entre l'élément de focalisation 34 et les bagues 54.

On a représenté sur les figures 3 et 4 le fonctionnement d'une traversée étanche conforme à l'invention telle que celle qui a été décrite en référence aux figures 1 et 2. La ligne d'usinage L est représentée sur la figure 3 en position rétractée. Dans cette position, le barillet 40 est en position fermée, c'est-à-dire que l'ouverture 44 qu'il comporte n'est pas située en regard de la ligne d'usinage, mais diamétralement opposée. Le moteur $m_1$ permet de faire passer le barillet 40 de la position ouverte à la position fermée. Par ailleurs, un cylindre de protection complémentaire 46 a été introduit au moyen d'une commande assurée par un moteur $m_2$ et un système vis-écrou. L'ensemble assure ainsi une protection complète de l'extérieur de la cellule 2 contre le rayonnement $\gamma$. La porte de cellule 9 est représentée fermée sur cette figure. On remarque également sur cette figure le blindage extérieur 70 et le bouchon 48 assurant une protection contre le rayonnement $\gamma$ lorsque le barillet 40 est en position ouverte. Le blindage 70 comporte une ouverture 72 par laquelle passe le faisceau laser. La ligne L étant en position rétractée sur la figure 3, l'ouverture 72 n'est pas située en regard de la fenêtre 20. Des moyens 74, représentés schématiquement, permettent de commander de manière étanche la translation de la ligne L. Ces moyens sont constitués par une tige de commande ou ringard.

Sur la figure 4, on a représenté la ligne d'usinage L en position sortie, avec la tête d'usinage à l'intérieur de la cellule 2. A partir de la position représentée sur la figure 3, on recule le cylindre 46 à l'aide du moteur $m_2$ puis on ouvre le barillet 40 au moyen du moteur $m_1$, la porte de cellule 9 restant en position fermée. Ensuite, au moyen de la tige de commande 74, l'ensemble de la ligne L a été déplacé en translation de manière à amener la porte de conteneur 14 au contact de la porte de cellule 9. On verrouille alors la porte de conteneur sur la porte de cellule par rotation d'un quart de tour. Par cette rotation, la porte du conteneur est verrouillée sur la porte de cellule, et une étanchéité est réalisée entre la bride de la porte de cellule et la bride du conteneur par rotation, on déverrouille la porte de la cellule 9 au moyen d'un vérin. On ouvre alors la porte de cellule, soit au moyen d'un télémanipulateur, soit au moyen d'un second vérin la porte de conteneur 14 restant fixée sur la porte de cellule 9. Les deux portes ayant été ôtées, on remarque qu'une étanchéité est maintenue au moyen du soufflet 24 reliant la bride de conteneur au conteneur 12. Le milieu radioactif peut certes pénétrer à l'intérieur de l'extrémité du conteneur 12, mais la contamination est limitée par le soufflet d'étanchéité 36 et par la fenêtre de confinement 34.

Au cas où la fenêtre de confinement 34 viendrait à se rompre, il existe une deuxième barrière de confinement. Elle est constituée par la paroi du conteneur 12 et par la fenêtre de confinement 20. Il s'agit d'une caractéristique importante car la fenêtre 34 est exposée au rayonnement pendant son fonctionnement, et elle devient progressivement opaque sous l'effet de ce rayonnement. Dès lors, elle s'échauffe davantage, ce qui peut conduire à sa rupture.

La tête de découpe pénètre à l'intérieur de la cellule chaude. La translation de la tête de découpe est assurée au moyen du moteur 30 et du système vis-écrou 28 qui permet le déplacement du tube 26 à l'extrémité duquel est fixée la tête de découpe.

Comme on peut le remarquer sur la figure 4, la translation de la ligne L amène la fenêtre 20 en regard de l'ouverture 72 pratiquée dans le blindage extérieur 70. Le laser peut donc être mis en œuvre.

La rentrée de la tête de découpe s'effectue dans l'ordre inverse. On commence par rétracter la tête de découpe à l'intérieur du conteneur 12 au moyen du moteur 30. L'ensemble des deux portes, porte de conteneur et porte de cellule, est alors remis en place, soit au moyen d'un télémanipulateur, soit au moyen d'un vérin la porte de la cellule 9 est verrouillée sur la bride de cellule 5 au moyen de verrou tournant commandé par un vérin.

La rotation de la ligne L manœuvrée par le ringard 74 solidarise la porte de conteneur 14 de la bride 25 du conteneur 12 qui est alors étanche et désolidarisé de la porte de cellule 9.

Le ringard 74 permet le recul de la ligne L et le dégagement du barillet 40 que l'on actionne en rotation de 180° par le moteur $m_1$ puis que l'on obture par le coulissement du bouchon 46 vers la cellule au moyen du moteur $m_2$ et du dispositif vis-écrou qui lui est associé.

**Revendications**

1. Traversée étanche de la paroi d'une cellule chaude par un faisceau laser, ladite cellule comportant une paroi de confinement (4) et une paroi épaisse de protection biologique (6) traversée caractérisée en ce qu'elle comporte:
— un fourreau (10) raccordé à la paroi épaisse de protection biologique (6) de la cellule,
— une bride (5) dite bride de cellule et une porte (9) étanche, dite porte de cellule, ménagées dans la paroi (4) de la cellule (2) en regard du fourreau (10),
— un conteneur étanche (12), de forme générale allongée, situé à l'intérieur du fourreau (10), le conteneur (12) étant muni à son extrémité (12a) dirigée vers la paroi (4) de la cellule d'une bride (25), dite bride de conteneur, raccordée par un soufflet d'étanchéité (24), une porte étanche (14), dite porte de conteneur s'adaptant sur la bride de conteneur (25),
— des moyens pour déplacer le conteneur (12) en translation dans le fourreau (10),
— des moyens pour verrouiller de manière étanche la porte du conteneur (14) sur la bride (25) de celui-ci,
— des moyens pour verrouiller la porte (9) de la cellule sur la bride (5) de celle-ci,
— des moyens permettant la combinaison de deux mouvements de verrouillage de telle sorte que les portes étant verrouillées, le conteneur (12) puisse être reculé,
— des moyens permettant la combinaison des deux mouvements de déverrouillage de telle sorte que les portes du conteneur (14) et de cellule (9) soient solidarisées entre elles, la porte de la cellule (9) et la porte du conteneur (14) pouvant alors être déposées ensemble à l'intérieur de la cellule (2),

– une ligne d'usinage (L) située à l'intérieur du conteneur,

– des moyens (28, 30, 32) pour déplacer en translations la ligne d'usinage (L) à l'intérieur du conteneur (12),

– des moyens de protection biologique (40) pouvant être interposés entre la cellule (2) et le conteneur (12) lorsqu'il est en position rétractée.

2. Traversée étanche selon la revendication 1, caractérisée en ce que les moyens de protection biologique sont constitués par un barillet (40) d'axe (42) parallèle à la ligne d'usinage (L), possédant une ouverture (44) au travers de laquelle la ligne d'usinage (L) peut être introduite dans la cellule (2), et derrière laquelle elle peut être rétractée lorsqu'elle n'est pas en service.

3. Traversée étanche selon l'une quelconque des revendications 1 et 2, caractérisée en ce que la ligne d'usinage (L) est constituée par un tube (26) terminé par une buse d'usinage (27), le tube (26) étant muni, à son extrémité interne (26a), d'une fenêtre de confinement (34).

4. Traversée étanche selon la revendication 1, caractérisée en ce qu'elle comporte des moyens de protection biologique (70) et (48) situés en arrière de la traversée étanche et protégeant le personnel d'exploitation lorsque le conteneur (12) est ouvert, et la ligne d'usinage (L) est en action.

5. Traversée étanche selon la revendication 1, caractérisée en ce que la ligne d'usinage est reliée de manière étanche au conteneur par un soufflet (36).

6. Traversée étanche selon la revendication 1, caractérisée en ce que la fenêtre (20), le dispositif de focalisation (34) et le miroir plan (18) sont refroidis par un écoulement de gaz de refroidissement.

7. Traversée étanche selon la revendication 6, caractérisée en ce que l'on utilise, pour le refroidissement, un gaz différent de celui de l'atmosphère de la cellule, dans le cas où le laser est utilisé pour découper ou pour souder.

8. Traversée étanche selon la revendication 3, caractérisée en ce que le tube (26) comporte des canalisations d'amenée (50) du gaz de refroidissement ainsi qu'un filtre (52) de sortie de ce gaz.

9. Procédé d'utilisation d'une traversée étanche selon la revendication 1, caractérisé en ce que:

– on efface les moyens de protection biologique (40) interposés entre la cellule (2) et le conteneur 12,

– on effectue une translation du conteneur jusqu'à engager la bride de la porte de cellule dans la porte de cellule,

– on déverrouille la porte du conteneur et, simultanément

– on verrouille la bride de la porte de conteneur sur la bride de cellule,

– on dépose, de l'intérieur de la cellule, l'ensemble constitué par la porte de cellule et la porte de conteneur,

– on réalise une translation du tube par rapport au fourreau, ce qui fait pénétrer la buse d'usinage à l'intérieur de la cellule.

**Patentansprüche**

1. Abgedichtete Laserstrahl-Durchführung durch die Wand einer heissen Zelle, welche eine Begrenzungswand (4) und eine dicke, durchquerte, biologische Schutzwand aufweist, dadurch gekennzeichnet, dass die Zelle umfasst:

– eine mit der dicken, biologischen Schutzwand (6) der Zelle verbundene Hülse (10),

– einen Flansch (5), der Zellenflansch genannt wird, und eine dichte Tür (9), die Zellentür genannt wird, die in der Wand (4) der Zelle (2) der Hülse (10) gegenüberliegend angeordnet sind,

– ein sich im Inneren der Hülse (10) befindender, dichter Behälter (12) allgemein länglicher Form, der an seinem zu der Wand (4) der Zelle weisenden Ende (12a) mit einem Flansch (25) versehen ist, der Behälterflansch genannt wird und über einen Abdichtungsbalgen (24) verbunden ist, wobei eine dichte Tür (14), die Behältertür genannt wird, mit dem Behälterflansch (25) zusammenpasst,

– Mittel zur dichten Verriegelung der Behältertür (14) an dem Behälterflansch (25),

– Mittel zum Verriegeln der Zellentür (9) an dem Zellenflansch (5),

– Mittel, die die Kombination der zwei Verriegelungsbewegungen derart erlauben, dass der Behälter (12) bei verriegelten Türen zurückgezogen werden kann,

– Mittel, die die Kombination der zwei Entriegelungsbewegungen derart erlauben, dass die Behältertür (14) und die Zellentür (9) miteinander verbunden sind, wobei die Zellentür (9) und die Behältertür (14) dann gemeinsam im Inneren der Zelle (2) abgesetzt werden können,

– eine sich im Inneren des Behälters befindende Arbeitsleitung (L),

– Mittel (28, 30, 32) zum Verschieben der Arbeitsleitung (L) im Inneren des Behälters (12),

– biologische Schutzmittel (40), die zwischen der Zelle (2) und dem Behälter (12) angeordnet werden können, wenn sich dieser in der zurückgezogenen Stellung befindet.

2. Abgedichtete Durchführung nach Anspruch 1, dadurch gekennzeichnet, dass die biologischen Schutzmittel von einer Walze (40) gebildet sind, deren Achse (42) parallel zu der Arbeitsleitung (L) verläuft und die eine Öffnung (44) aufweist, durch die hindurch die Arbeitsleitung (L) in die Zelle (2) einführbar ist und hinter welche diese zurückziehbar ist, wenn sie ausser Betrieb ist.

3. Abgedichtete Durchführung nach Anspruch 1 oder 2, dadurch gekennzeichnet, dass die Arbeitsleitung (L) von einem Rohr (26) gebildet ist, welches mit einer Arbeitsdüse (27) abschliesst, und dass das Rohr (26) an seinem inneren Ende (26a) mit einem Begrenzungsfenster (34) versehen ist.

4. Abgedichtete Durchführung nach Anspruch 1, dadurch gekennzeichnet, dass diese biologische Schutzmittel (70) und (48) umfasst, die sich rückwärtig der dichten Durchführung befinden und die Bedienungsperson schützen, wenn der Behälter (12) geöffnet ist und sich die Arbeitsleitung (L) im Einsatz befindet.

5. Abgedichtete Durchführung nach Anspruch 1, dadurch gekennzeichnet, dass die Arbeitsleitung mittels eines Balgen (36) dicht mit dem Behälter verbunden ist.

6. Abgedichtete Durchführung nach Anspruch 1, dadurch gekennzeichnet, dass das Fenster (20), die Fokussierungseinrichtung (34) und der Planspiegel (18) durch eine Kühlgasströmung gekühlt werden.

7. Abgedichtete Durchführung nach Anspruch 6, dadurch gekennzeichnet, dass für die Kühlung ein von der Atmosphäre der Zelle unterschiedliches Gas verwendet wird, wenn der Laser zum Schneiden oder Schweissen verwendet wird.

8. Abgedichtete Durchführung nach Anspruch 3, dadurch gekennzeichnet, dass das Rohr (26) Zuführleitungen (50) für das Kühlgas sowie ein Auslassfilter (52) für dieses Gas umfasst.

9. Verfahren zur Verwendung einer abgedichteten Durchführung nach Anspruch 1, dadurch gekennzeichnet, dass:

– die zwischen der Zelle (2) und dem Behälter (12) angeordneten, biologischen Schutzmittel (40) aufgehoben werden,

– eine Verschiebung des Behälters bis zum Eingriff mit dem Flansch der Zellentür in der Zellentür durchgeführt wird,

– die Behältertür entriegelt wird, und gleichzeitig

– der Flansch der Behältertür auf dem Zellenflansch verriegelt wird,

– vom Inneren der die von der Zellentür und der Behältertür gebildete Gesamtheit niedergesetzt wird,

– eine Verschiebung des Rohres in Bezug auf die Hülse durchgeführt wird, wodurch die Arbeitsdüse in das Innere der Zelle eindringt.

## Claims

1. Fluid-tight passage for a laser beam through the wall of a hot cell, said cell comprising a confinement wall (4) and a thick biological protection wall (6), said passage being characterized in that it comprises:

– a sleeve (10) fixed to the thick biological protection wall (6) of the cell,

– a flange (5), hereinafter termed the cell flange, and a fluid-tight door (9), hereinafter termed cell door, formed in the wall (4) of the cell (2) facing the sleeve (10),

– a fluid-tight container (12), of generally elongated form, located in the interior of the sleeve (10), the container (12) having at its end (12a) nearest the cell wall (4) a flange (25), hereinafter called the container flange, connected by a fluid-tight bellows (24) to a fluid-tight door (14), hereinafter termed container door, adapted to fit the container flange (25),

– means for displacing the container (12) lengthways in the sleeve (10),

– means for fluid-tight locking the container door (14) to the flange (25) thereof,

– means for locking the cell door (9) to the flange (5) thereof,

– means permitting combination of two locking movements whereby, the doors being locked, the container (12) may be retracted,

– means permitting combination of two unlocking movements whereby the container door (14) and the cell door (9) being fixed together, the cell door (9) and the container door (14) may thereby be moved into the interior of the cell (2),

– a manipulation line (L), located within the container,

– means (28, 30, 32) for moving the manipulation line (L) lengthways inside the container (12), and

– biological protection means (40) interposable between the cell (2) and the container (12) when the latter is in the retracted position.

2. Fluid-tight passage according to Claim 1, characterized in that the biological protection means comprise a cylinder (40) whose axis (42) is parallel to the manipulation line (L), having an opening (44) through which the manipulation line (L) may ve introduced into the cell (2) and behind which it may be withdrawn when it is in service.

3. Fluid-tight passage according to either of Claims 1 and 2, characterized in that the manipulation line (L) comprises a tube (26) terminated by a manipulation nozzle (27), the tube (26) having a confinement window (34) at its internal end (26a).

4. Fluid-tight passage according to Claim 1, characterized in that it comprises biological protection means (70) and (48) located behind the fluid-tight passage and protecting operating personnel when the container (12) is open and the manipulation line (L) is in operation.

5. Fluid-tight passage according to Claim 1, characterized in that the manipulation line (L) is connected in fluid-tight manner to the container by a bellows (36).

6. Fluid-tight passage according to Claim 1, characterized in that the window (20) the focussing means (34) and the flat mirror (18) are cooled by a flow of cooling gas.

7. Fluid-tight passage according to Claim 6, characterized in that cooling is carried out using a gas different from that of the atmosphere of the cell, when the laser is used for cutting or for welding.

8. Fluid-tight passage according to Claim 3, characterized in that the tube (26) comprises cooling gas inlet tubes (50) as well as an output filter (52) for said gas.

9. Process for the utilization of a fluid-tight passage according to Claim 1, characterized in that the biological protection means (40) interposed between the cell (2) and the container (12) are displaced,

– the container is moved until the cell door flange engages the cell door,

**0 057 634**

– the container door is unlocked and, simultaneously,

– the container door flange is locked to the cell door,

– the assembly constituted by the cell door and the container door are moved into the interior of the cell, and

– the tube is moved longitudinally with respect to the sleeve, to move the manipulation nozzle into the interior of the cell.

FIG.1

2,3

FIG.2

FIG. 3

FIG. 4